# EUROPEAN PATENT APPLICATION

(11) **EP 4 847 354 A1**
(43) Date of publication of application: **02.12.2026**
(21) Application number: 25179306.3
(22) Date of filing: 28.05.2025
(51) Int. Cl.: B62D 33/077, B62D 33/06

(54) **METHOD FOR LOCKING A REAR CAB SUSPENSION TO A VEHICLE CHASSIS**

(71) Applicant: Volvo Truck Corporation, 405 08 Göteborg (SE)
(72) Inventor: SAROHA, Lalit, Oak Ridge, 27310 (US); SENKOWSKI ORTEGA, Andres, Greensboro, 27455 (US)
(74) Representative: Zacco Sweden AB

(57) **Abstract**

A method for locking a rear cab suspension (12) to a vehicle chassis (14), the method comprising: mounting (S1) a first bracket (16) to the rear cab suspension, wherein the first bracket (16) comprises at least one pin (22, 52, 54a-b), and wherein the rear cab suspension (12) is installed on a non-tiltable cab (56); mounting (S2) a second bracket (24) on the vehicle chassis (14), wherein the second bracket (24) comprises first and second pivotable pawls (30a-b); and when decking the non-tiltable cab (56) on the vehicle chassis (14), bringing (S3) the first and second brackets (16, 24) together such that at least one of the first and second pivotable pawls (30a-b) automatically locks at least one (22, 54a-b) of the at least one pin, thereby locking the rear cab suspension (12) to the vehicle chassis (14).

## Description

### TECHNICAL FIELD

The disclosure relates in particular aspects to a system and method for locking a rear cab suspension to a (vehicle) chassis. The disclosure can be applied to heavy-duty vehicles, such as trucks, among other vehicle types. Although the disclosure may be described with respect to a particular vehicle, the disclosure is not restricted to any particular vehicle.

### BACKGROUND

A cab or cabin of a vehicle such as a truck or tractor is the inside space where the driver is seated along with any passenger(s). The cab can comprise a sleeper, which is a compartment where the driver can rest while not driving.

When manufacturing/assembling the vehicle, a complete rear cab suspension is typically installed on a cab before the cab comes to decking on a vehicle chassis. When decking the cab on the chassis, in particular a non-tiltable cab, the rear cab suspension may conventionally be attached to the chassis via angled brackets using bolts and nuts.

### SUMMARY

According to a first aspect of the disclosure, there is provided a method for locking a rear cab suspension to a vehicle chassis, the method comprising: mounting a first bracket to the rear cab suspension, wherein the first bracket comprises at least one pin, and wherein the rear cab suspension is installed on a non-tiltable cab; mounting a second bracket on the vehicle chassis, wherein the second bracket comprises first and second pivotable pawls; and when decking the non-tiltable cab on the vehicle chassis, bringing the first and second brackets together such that at least one of the first and second pivotable pawls (automatically) locks at least one of the at least one pin, thereby locking the rear cab suspension to the vehicle chassis. The first aspect of the disclosure may seek to enable or at least facilitate locking the rear cab suspension for a non-tiltable cab to a vehicle chassis. A technical benefit may include that the rear cab suspension may easily be locked to the vehicle chassis, without having to (manually) fit any bolts and nuts, which in turn enables or at least facilitates locking the rear cab suspension to the vehicle chassis in case other obtrusive components such as a gantry are already mounted to the chassis immediately behind the non-tiltable cab.

Optionally in some examples, including in at least one preferred example, the second bracket may further comprise a spring mechanism and a restraining mechanism, wherein the first and second pawls have an open position and a closed position, wherein the spring mechanism is configured to urge the first and second pawls to the open position, wherein the first and second pawls are pivoted from the open position to the closed position by at least one of the at least one pin of the first bracket when bringing the first and second brackets together, wherein the first and second pawls in the closed position lock at least one of the at least one pin of the first bracket, and wherein the restraining mechanism secures the first and second pawls in the closed position.

Optionally in some examples, including in at least one preferred example, the at least one pin of the first bracket may be a single pin contacting actuation portions of the first and second pawls so as to rotate hook portions of the first and second pawls adapted to engage the single pin towards each other when pivoting the first and second pawls from the open position to the closed position. A technical benefit of having two pawls latching on one pin may include space saving with max. force locking. That is, the first bracket may here have a simple and/or compact design, which in particular may be suitable for a (smaller) day cab without any sleeper.

Optionally in some examples, including in at least one preferred example, said actuation portions may be offset in a direction parallel to a pivot axis of the first and second pawls, and at least partly overlap when the first and second pawls are in the closed position. A technical benefit may include that the second bracket may have a compact design, which in particular may be suitable for a (smaller) day cab without any sleeper.

Optionally in some examples, including in at least one preferred example, said hook portions may be offset in a direction parallel to a pivot axis of the first and second pawls, and at least partly overlap when the first and second pawls are in the closed position. A technical benefit may include that the first and second pawls surely can lock the single pin while the second bracket may have a compact design, wherein the latter in particular may be suitable for a (smaller) day cab without any sleeper.

Optionally in some examples, including in at least one preferred example, the at least one pin of the first bracket may comprise an actuating pin and first and second locking pins, wherein the actuating pin contacts actuation portions of the first and second pawls so as to rotate hook portions of the first and second pawls adapted to engage the first and second locking pins towards each other when pivoting the first and second pawls from the open position to the closed position. A technical benefit of having two locking pins may include that they offer two restraining points. If one locking pin fails due to some reason, the other locking pin is there to keep the cab connected to the chassis. Moreover, the first and second locking pins may also provide bigger foot print for better load distribution. This first bracket may be suitable for a (larger) sleeper cab.

Optionally in some examples, including in at least one preferred example, the actuating pin and the first and second locking pins of the first bracket may be arranged in an upside down triangular configuration, with the actuating pin in the bottom corner and the first and second locking pins in the top corners.

Optionally in some examples, including in at least one preferred example, the restraining mechanism may comprise a spring and a restraining element controlled by the spring to snap into indentations on the first and second pawls when the first and second pawls are in the closed position, to thereby secure the first and second pawls in the closed position.

Optionally in some examples, including in at least one preferred example, the first bracket may be mounted under a crossbeam of the rear cab suspension. A technical benefit may include that the same interface on the crossbeam can be used as for the conventional solution where the rear cab suspension is attached to the chassis via angled brackets using bolts and nuts.

Optionally in some examples, including in at least one preferred example, the second bracket may be mounted directly on a rail of the chassis. A technical benefit is a less complex solution, since no intermediate part between the second bracket and the rail is needed.

Optionally in some examples, including in at least one preferred example, a gantry to be located immediately behind the non-tiltable cab may be mounted to the chassis before decking the non-tiltable cab on the chassis, the gantry comprising at least one traction battery pack.

According to a second aspect of the disclosure, there is provided a system for locking a rear cab suspension to a chassis, the system comprising: an upper bracket adapted to be mounted to the rear cab suspension, the upper bracket comprising at least one pin; and a lower bracket adapted to be mounted on the chassis, the lower bracket comprising a first pawl and a second pawl, a spring mechanism, and a restraining mechanism, wherein the first and second pawls have an open position and a closed position, wherein the spring mechanism is configured to urge the first and second pawls to the open position, wherein the first and second pawls are pivotable from the open position to the closed position by at least one of the at least one pin of the upper bracket, wherein the first and second pawls in the closed position are configured to lock at least one of the at least one pin of the upper bracket, and wherein the restraining mechanism is adapted to secure the first and second pawls in the closed position. The second aspect of the disclosure may seek to enable or at least facilitate locking the rear cab suspension, in particular for a non-tiltable cab, to a chassis. A technical benefit may include that the rear cab suspension may easily be locked to the vehicle chassis, without having to (manually) fit any bolts and nuts, which in turn enables or at least facilitates locking the rear cab suspension to the vehicle chassis in case other obtrusive components such as a gantry are already mounted to the chassis immediately behind the (non-tiltable) cab.

Optionally in some examples, including in at least one preferred example, the at least one pin of the upper bracket may be a single pin adapted to contact actuation portions of the first and second pawls so as to rotate hook portions of the first and second pawls adapted to engage the single pin towards each other when pivoting the first and second pawls from the open position to the closed position. A technical benefit may include that the first bracket with a single pin may have a simple and/or compact design, which in particular may be suitable for a (smaller) day cab without any sleeper.

Optionally in some examples, including in at least one preferred example, said actuation portions may be offset in a direction parallel to a pivot axis of the first and second pawls, and arranged to at least partly overlap when the first and second pawls are in the closed position. A technical benefit may include that the second bracket may have a compact design, which in particular may be suitable for a (smaller) day cab without any sleeper.

Optionally in some examples, including in at least one preferred example, said hook portions may be offset in a direction parallel to a pivot axis of the first and second pawls, and arranged to at least partly overlap when the first and second pawls are in the closed position. A technical benefit may include that the first and second pawls surely can lock the single pin while the second bracket may have a compact design, wherein the latter in particular may be suitable for a (smaller) day cab without any sleeper.

Optionally in some examples, including in at least one preferred example, the at least one pin of the upper bracket comprises an actuating pin, a first locking pin, and a second locking pin, wherein the actuating pin is adapted to contact actuation portions of the first and second pawls so as to rotate hook portions of the first and second pawls adapted to engage the first and second locking pins towards each other when pivoting the first and second pawls from the open position to the closed position. A technical benefit of having two locking pins may include that they offer two restraining points. If one locking pin fails due to some reason, the other locking pin is there to keep the cab connected to the chassis. Moreover, the first and second locking pins may also provide bigger foot print for better load distribution. This first bracket may be suitable for a (larger) sleeper cab.

Optionally in some examples, including in at least one preferred example, the actuating pin and the first and second locking pins of the upper bracket may be arranged in an upside down triangular configuration, with the actuating pin in the bottom corner and the first and second locking pins in the top corners.

Optionally in some examples, including in at least one preferred example, the restraining mechanism may comprise a spring and a restraining element controlled by the spring to snap into indentations on the first and second pawls when the first and second pawls are in the closed position, to thereby secure the first and second pawls in the closed position.

According to a third aspect of the disclosure, there is provided a vehicle, comprising: a rear cab suspension; a chassis; and the system according to the second aspect (for) locking the rear cab suspension to the chassis.

Optionally in some examples, including in at least one preferred example, the upper bracket may be mounted under a crossbeam of the rear cab suspension. A technical benefit may include that the same interface on the crossbeam can be used as for the conventional solution where the rear cab suspension is attached to the chassis via angled brackets using bolts and nuts.

Optionally in some examples, including in at least one preferred example, the lower bracket may be mounted directly on a rail of the chassis. A technical benefit is a less complex solution, since no intermediate part between the second bracket and the rail is needed.

Optionally in some examples, including in at least one preferred example, the vehicles may further comprise a cab and a gantry, the gantry comprising at least one traction battery pack, wherein the rear cab suspension is installed on the cab, and wherein the gantry is mounted to the chassis immediately behind the cab.

Optionally in some examples, including in at least one preferred example, the cab may be a non-tiltable cab.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIGs. 1a****-c** illustrate an exemplary system for locking a rear cab suspension to a chassis according to an example, with pawls open, in side view, transparent side view, and transparent perspective view, respectively.
**FIGs. 2a****-c** show the system of **FIGs. 1a****-c** with pawls closed, in side view, transparent side view, and transparent perspective view, respectively.
**FIGs. 3a****-c** illustrate an exemplary system for locking a rear cab suspension to a chassis according to another example, with pawls open, in side view, transparent side view, and transparent perspective view, respectively.
**FIGs. 4a****-c** show the system of **FIGs. 3a****-c** with pawls closed, in side view, transparent side view, and transparent perspective view, respectively.
**FIG. 5** is a flow chart of an exemplary method for locking a rear cab suspension to a vehicle chassis according to an example.
**FIGs. 6a****-c** are schematic side views illustrating locking a rear cab suspension to a vehicle chassis according to an example.

### DETAILED DESCRIPTION

The detailed description set forth below provides information and examples of the disclosed technology with sufficient detail to enable those skilled in the art to practice the disclosure.

As mentioned above, when manufacturing/assembling the vehicle, a complete rear cab suspension is typically installed on a cab before the cab comes to decking on a vehicle chassis. When decking the cab on the chassis, in particular a non-tiltable cab, the rear cab suspension may conventionally be attached to the chassis via angled brackets using bolts and nuts. However, other components already mounted to the chassis can make such attachment difficult, because the other components may block access needed to fit the bolts and nuts.

The present disclosure may seek to enable or at least facilitate locking the rear cab suspension for a non-tiltable cab to a vehicle chassis. According to a first aspect of the disclosure, there is provided a method for locking a rear cab suspension to a vehicle chassis, the method comprising: mounting a first bracket to the rear cab suspension, wherein the first bracket comprises at least one pin, and wherein the rear cab suspension is installed on a non-tiltable cab; mounting a second bracket on the vehicle chassis, wherein the second bracket comprises first and second pivotable pawls; and when decking the non-tiltable cab on the vehicle chassis, bringing the first and second brackets together such that at least one of the first and second pivotable pawls locks at least one of the at least one pin, thereby locking the rear cab suspension to the vehicle chassis. A technical benefit may include that the rear cab suspension may easily be locked to the vehicle chassis, without having to (manually) fit any bolts and nuts, which in turn enables or at least facilitates locking the rear cab suspension to the vehicle chassis in case other obtrusive components such as a gantry are already mounted to the chassis immediately behind the non-tiltable cab.

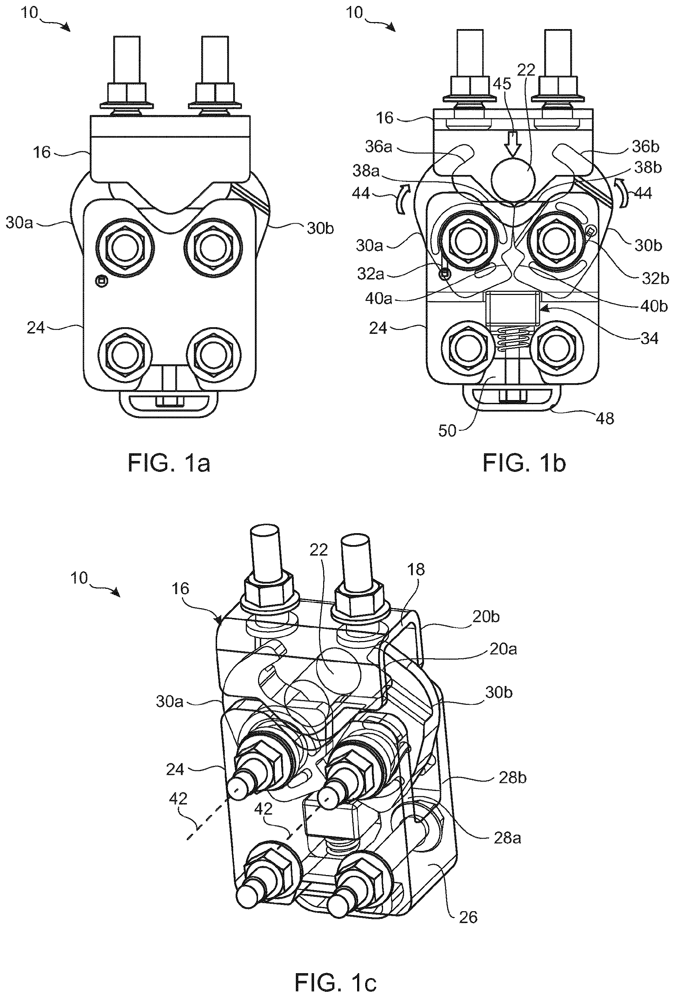

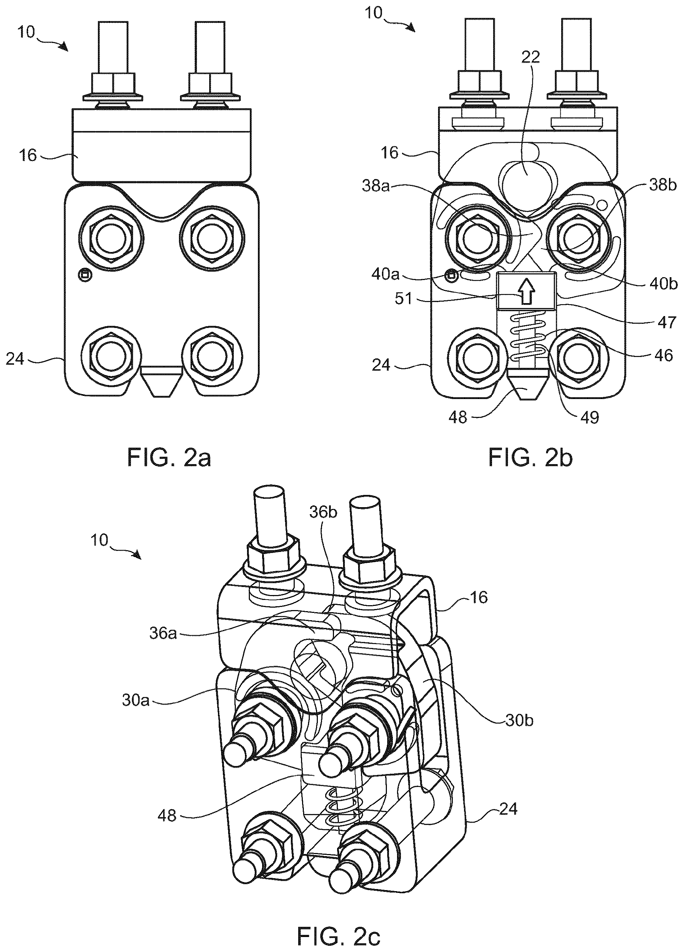

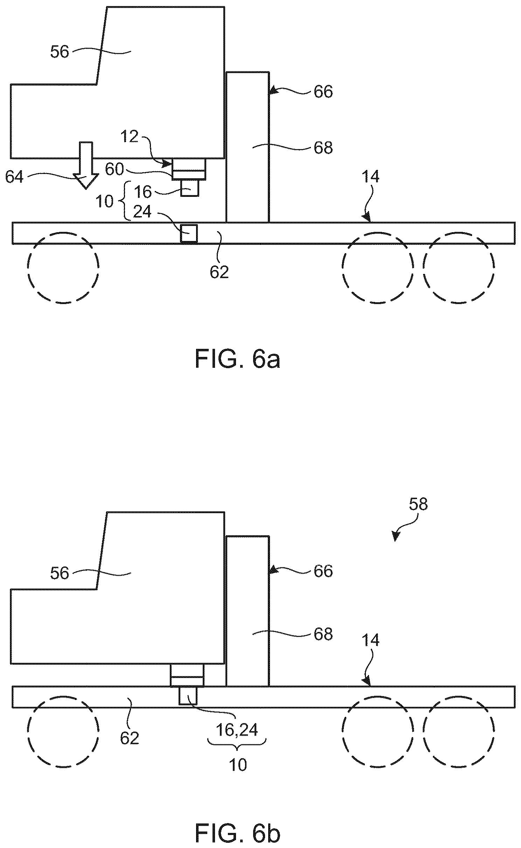

**FIGs. 1a****-c** and **FIGs. 2a****-c** illustrate an exemplary system 10 for locking a rear cab suspension 12 to a chassis 14 according to an example. The rear cab suspension 12 and the chassis 14 are shown in **FIGs. 6a****-b.**

The system 10 comprises an upper (or first) bracket 16. The upper bracket 16 may have a (substantially) U-shaped cross section, with a base 18 and two legs 20a-b.

The upper bracket 16 is adapted to be mounted to the rear cab suspension 12. Specifically, the base 18 of the U-shaped cross section may be mounted to the rear cab suspension 12, for example by bolts and nuts.

The upper bracket 16 comprises at least one pin (or striker), here a single pin 22. The single pin 22 may act as both actuating pin and locking pin, as will be explained hereinbelow. The pin 22 may extend between the legs 20a-b of the U-shaped cross section.

The system 10 further comprises a lower (or second) bracket 24. The lower bracket 24 may have a (substantially) U-shaped cross section, with a base 26 and two legs 28a-b. The opening of the U-shaped cross section of the lower bracket 24 may generally face the opening of the U-shaped cross section of the upper bracket 16.

The lower bracket 24 is adapted to be mounted on the chassis 14. Specifically, the lower bracket 24 may be mounted on the chassis 14, for example by bolts and nuts, such that the outside of one of the two legs 28a-b of the U-shaped cross section faces (and optionally abuts) the chassis 14.

The lower bracket 24 comprises a first pawl 30a and a second pawl 30b. The first and second pawls 30a-b could also be referred to as first and second latch jaws. The lower bracket 24 may further comprise a spring mechanism 32a-b and a restraining mechanism 34.

The first and second pawls 30a-b may be arranged between the legs 28a-b of the U-shaped cross section of the lower bracket 24. Moreover, each of the first and second pawls 30a-b may have a (upper) hook portion 36a-b, an (intermediate) actuation portion 38a-b, and an (lower) indentation 40a-b.

The first and second pawls 30a-b may have an open position (**FIGs. 1a****-c**)**,** where the hook portions 36a-b are separated, and a closed position (**FIGs. 2a****-c**). Specifically, the first and second pawls 30a-b may be pivotable between the open and closed positions, in particular around respective pivot axes 42.

The spring mechanism 32a-b may be configured to urge the first and second pawls 30a-b to the open position. The spring mechanism 32a-b may ensure that the first and second pawls 30a-b naturally are in the open position. The spring mechanism may for example comprise a first spring 32a arranged to urge/pivot the first pawl 30a around its pivot axis 42 in an anticlockwise direction, and a second spring 32b arranged to urge/pivot the second pawl 30b around its pivot axis 42 in a clockwise direction. The first and second springs 32a-b may for example be torsion springs.

The first and second pawls 30a-b may be pivoted from the open position to the closed position (as indicated by arrows 44) by the pin 22 of the upper bracket 16 when bringing the upper and lower brackets 16, 24 together (as indicated by arrow 45), wherein the first and second pawls 30a-b in the closed position are configured to lock the same pin 22 of the upper bracket 16, thereby locking the rear cab suspension 12 to the chassis 14. Specifically, the single pin 22 may be adapted to contact both actuation portions 38a-b and by gravity and cab weight overcome the force of the spring mechanism 32a-b and rotate the hook portions 36a-b, which are adapted to engage the pin 22, towards each other when pivoting the first and second pawls 30a-b from the open position to the closed position.

The restraining mechanism 34 may be adapted to secure the first and second pawls 30a-b in the closed position. Specifically, the restraining mechanism 34 may comprise a spring 46 and a restraining element 47. The restraining mechanism 34 may further comprise a handle 48 and a rod 49 connecting the restraining element 47 and the handle 48. The handle 48 may in a first orientation (as shown in **FIGs. 1a****-c**) bridge a recess 50 on the underside of the lower bracket 24. The spring 46, which may be a helical spring or coil spring, may be disposed around the rod 49. The restraining element 47 may be controlled by the spring 46 to snap into the indentations 40a-b on the first and second pawls 30a-b (as indicted by arrow 51) when the first and second pawls 30a-b are in the closed position and the handle 48 is turned (approximately 90 degrees) to a second orientation where the handle 48 is received in the recess 50 (as shown in **FIGs. 2a****-c**), to thereby secure the first and second pawls 30a-b in the closed position. The restraining mechanism 34 may be arranged at the base 26 of the U-shaped cross section of the lower bracket 24. The spring 46 may for example be a helical spring. The restraining element 47 may for example be box- or cube-shaped. The shape of the restraining element 47 may match the shape/recess formed by the indentations 40a-b when the first and second pawls 30a-b are in the closed position. The handle 48 may be manually turned by an operator.

Moreover, the actuation portions 38a-b may here be offset in a direction parallel to the pivot axes 42, and arranged to (at least) partly overlap when the first and second pawls 30a-b are in the closed position, as seen in particular in **FIG. 1c** and **FIGs. 2b****-c**. Likewise, the hook portions 36a-b may be offset in a direction parallel to the pivot axes 42, and arranged to (at least) partly overlap when the first and second pawls 30a-b are in the closed position.

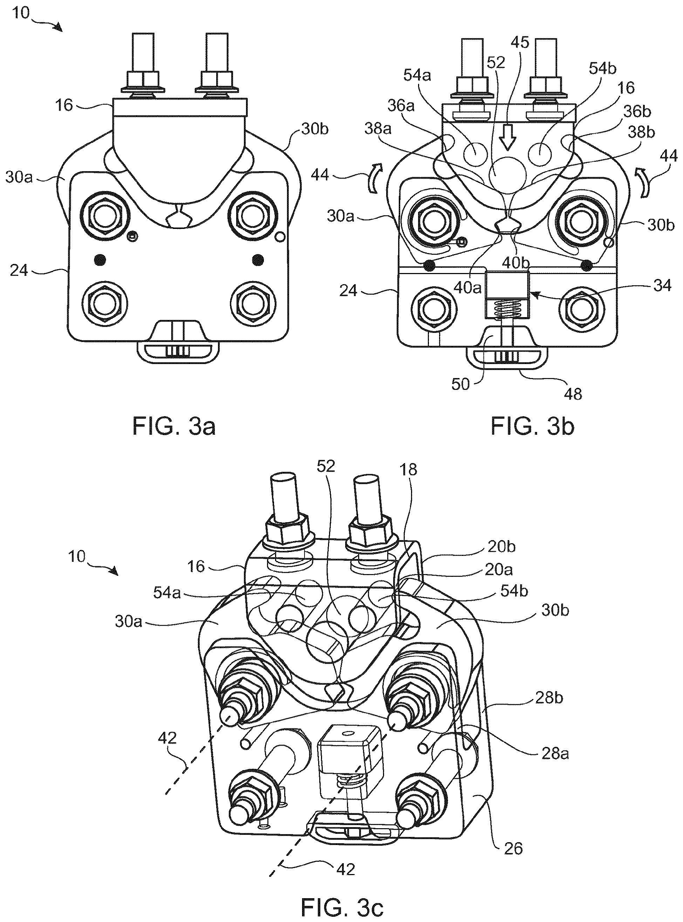

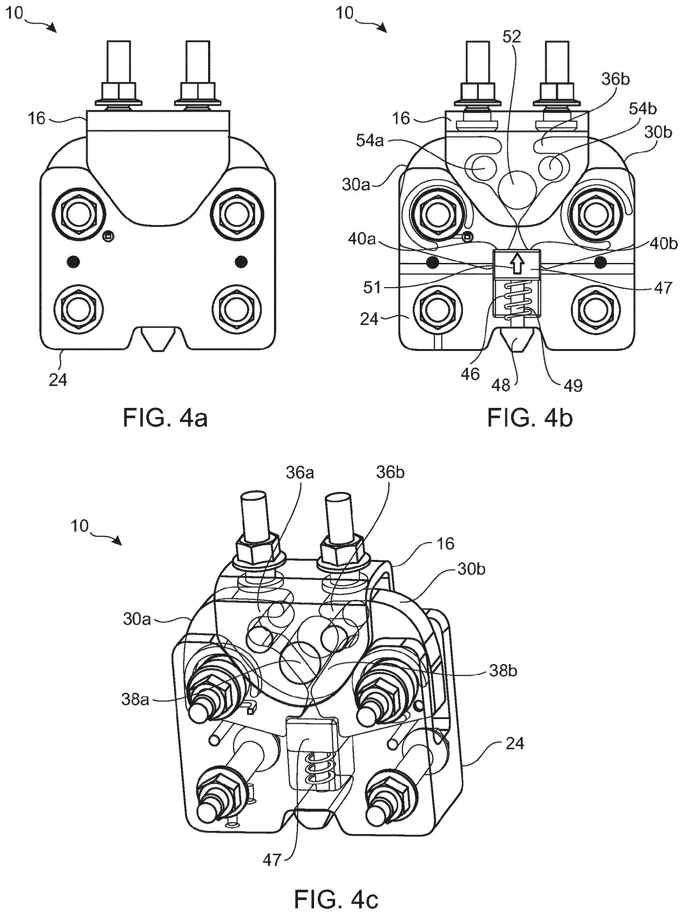

**FIGs. 3a****-c** and **FIGs. 4a****-c** illustrate an exemplary system 10 for locking a rear cab suspension 12 to a chassis 14 according to another example. This system 10 is similar to that in **FIGs. 1a****-c** and **FIGs. 2a****-c**, with some exceptions.

For example, the upper bracket 16 here comprises an actuating pin 52, a first locking pin 54a, and a second locking pin 54b. The actuating pin 52 and the first and second locking pins 54a-b may be arranged in an upside down triangular configuration, with the actuating pin 52 in the bottom corner and the first and second locking pins 54a-b in the top corners. The actuating pin 52 and the first and second locking pins 54a-b may extend between the legs 20a-b of the U-shaped cross section of the upper bracket 16.

Moreover, the hook portions 36a-b and the actuation portions 38a-b of the first and second pawls 30a-b of the upper bracket 24 may be located on the same level, without the aforementioned offset.

Moreover, the first and second pawls 30a-b may here be pivoted from the open position to the closed position (as indicated by arrows 44) by the actuating pin 52 of the upper bracket 16 when bringing the upper and lower brackets 16, 24 together (as indicated by arrow 45), wherein the first and second pawls 30a-b in the closed position are configured to lock the first and second locking pins 54a-b of the upper bracket 16, thereby locking the rear cab suspension 12 to the chassis 14. Specifically, the (single) actuating pin 52 may be adapted to contact both actuation portions 38a-b and by gravity and cab weight overcome the force of the spring mechanism 32a-b and rotate the hook portions 36a-b, which are adapted to engage the first and second locking pins 54a-b, respectively, towards each other when pivoting the first and second pawls 30a-b from the open position to the closed position.

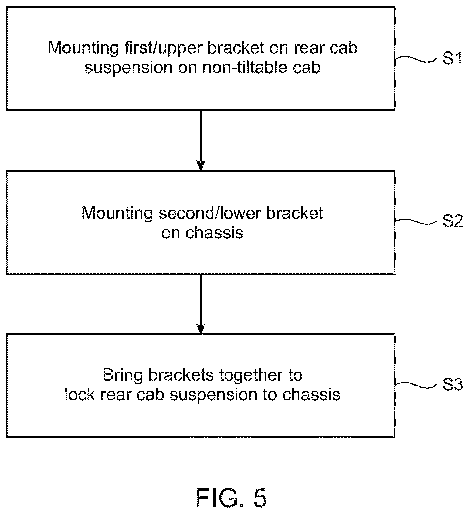

Turning to **FIG. 5** and **FIGs. 6a****-b,** **FIG. 5** is a flow chart of an exemplary method for locking rear cab suspension 12 to (vehicle) chassis 14 according to an example. The method may for example use either system 10 described hereinabove, although other systems could be used as well.

The method comprises mounting S1 the upper bracket 16 to the rear cab suspension 12, which rear cab suspension 12 is installed on a non-tiltable cab 56 for vehicle 58. The upper bracket 16 may for example be mounted under a crossbeam 60 of the rear cab suspension 12. The crossbeam 60 may extend from left to right (as seen with reference to the vehicle 58) and carry other components of the rear cab suspension 12. The upper bracket 16 may for example be mounted to the crossbeam 60 using bolts and nuts.

The method further comprises mounting S2 the lower bracket 24 on the chassis 14 of the vehicle 58. The lower bracket 24 may for example be mounted directly on a rail 62 of the chassis 14, for example using bolts and nuts. The rail 62 be one of the main structural beams, usually made of steel, that form the backbone of the chassis 14.

Step S2 may be performed before, after, or at the same time as step S1. Moreover, typically two upper brackets 16 will be mounted to the rear cab suspension 12, one on the left side and one on the right side. Likewise, typically two lower brackets 24 will be mounted on the chassis 14, one on the left side and one on the right side.

The method may then comprise, when decking the non-tiltable cab 56 on the chassis 14, bringing S3 the first and second brackets 16, 24 together (as indicated by arrow 64) such that the first and second pivotable pawls 30a-b lock the single pin 22 or the first and second locking pins 54a-b, thereby locking the rear cab suspension 12 to the chassis 14. Decking the non-tiltable cab 56 on the chassis 14 generally/typically includes lowering the non-tiltable cab 56 onto the chassis 14 by a crane or the like.

The non-tiltable cab 56 may be "permanently" positioned on the chassis 14 of the vehicle 58, as opposed to a cab that tilts forward e.g. to access a vehicle engine. That is, there is here no need to frequently unlock the rear cab suspension 12 from the chassis 14. The non-tiltable cab 56 may or may not comprise a sleeper.

As seen in **FIGs. 6a****-b,** a gantry 66 to be located immediately behind the non-tiltable cab 56 may be mounted to the chassis 14 before decking the non-tiltable cab 56 on the chassis 14. Because of the present method (and system 10), the rear cab suspension 12 may easily be locked to the chassis 14, without having to manually fit any bolts and nuts or the like in step S3, which in turn enables or at least facilitates locking the rear cab suspension 12 to the chassis 14 when the "obtrusive" gantry 66 is already mounted to the chassis 14 immediately behind the non-tiltable cab 56. Moreover, it is appreciated that the upper and lower brackets 16, 24 readily can be mounted (in steps S1 and S2) to the rear cab suspension 12 and on the chassis 14, respectively, without the gantry 66 being the way.

The gantry 66 may have a width (substantially) corresponding to the width of the non-tiltable cab 56, and a height corresponding to at least 30% or at least 50% of the height of the non-tiltable cab 56. The gantry 66 may for example be a (covered) structure supporting for example at least one traction battery pack 68 of the vehicle 58. The at least one traction battery pack 68 may be adapted to power at least one electric motor of the vehicle 58 for propulsion of the vehicle 58. Accordingly, the vehicle 58 may be a battery electric vehicle or a hybrid vehicle. Moreover, the vehicle 58 may be a heavy-duty vehicle, such as a truck or tractor.

Example 1: A method for locking a rear cab suspension to a vehicle chassis, the method comprising: mounting a first bracket to the rear cab suspension, wherein the first bracket comprises at least one pin, and wherein the rear cab suspension is installed on a non-tiltable cab; mounting a second bracket on the vehicle chassis, wherein the second bracket comprises first and second pivotable pawls; and when decking the non-tiltable cab on the vehicle chassis, bringing the first and second brackets together such that at least one of the first and second pivotable pawls automatically locks at least one of the at least one pin, thereby locking the rear cab suspension to the vehicle chassis.

Example 2: The method of example 1, wherein the second bracket further comprises a spring mechanism and a restraining mechanism, wherein the first and second pawls have an open position and a closed position, wherein the spring mechanism is configured to urge the first and second pawls to the open position, wherein the first and second pawls are pivoted from the open position to the closed position by at least one of the at least one pin of the first bracket when bringing the first and second brackets together, wherein the first and second pawls in the closed position lock at least one of the at least one pin of the first bracket, and wherein the restraining mechanism secures the first and second pawls in the closed position.

Example 3: The method of example 2, wherein the at least one pin of the first bracket is a single pin contacting actuation portions of the first and second pawls so as to rotate hook portions of the first and second pawls adapted to engage the single pin towards each other when pivoting the first and second pawls from the open position to the closed position.

Example 4: The method of example 3, wherein said actuation portions are offset in a direction parallel to a pivot axis of the first and second pawls, and at least partly overlap when the first and second pawls are in the closed position, and/or wherein said hook portions are offset in a direction parallel to a pivot axis of the first and second pawls, and at least partly overlap when the first and second pawls are in the closed position.

Example 5: The method of example 2, wherein the at least one pin of the first bracket comprises an actuating pin and first and second locking pins, and wherein the actuating pin contacts actuation portions of the first and second pawls so as to rotate hook portions of the first and second pawls adapted to engage the first and second locking pins towards each other when pivoting the first and second pawls from the open position to the closed position

Example 6: The method of example 5, wherein the actuating pin and the first and second locking pins of the first bracket are arranged in an upside down triangular configuration, with the actuating pin in the bottom corner and the first and second locking pins in the top corners.

Example 7: The method of any of examples 2-6, wherein the restraining mechanism comprises a spring and a restraining element controlled by the spring to snap into indentations on the first and second pawls when the first and second pawls are in the closed position, to thereby secure the first and second pawls in the closed position.

Example 8: The method of any of examples 1-7, wherein the first bracket is mounted under a crossbeam of the rear cab suspension, and wherein the second bracket is mounted directly on a rail of the chassis.

Example 9: The method of any of examples 1-8, wherein a gantry to be located immediately behind the non-tiltable cab is mounted to the chassis before decking the non-tiltable cab on the chassis, the gantry comprising at least one traction battery pack.

Example 10: A system for locking a rear cab suspension to a chassis, the system comprising: an upper bracket adapted to be mounted to the rear cab suspension, the upper bracket comprising at least one pin; and a lower bracket adapted to be mounted on the chassis, the lower bracket comprising a first pawl and a second pawl, a spring mechanism, and a restraining mechanism, wherein the first and second pawls have an open position and a closed position, wherein the spring mechanism is configured to urge the first and second pawls to the open position, wherein the first and second pawls are pivotable from the open position to the closed position by at least one of the at least one pin of the upper bracket, wherein the first and second pawls in the closed position are configured to lock at least one of the at least one pin of the upper bracket, and wherein the restraining mechanism is adapted to secure the first and second pawls in the closed position.

Example 11: The system of example 10, wherein the at least one pin of the upper bracket is a single pin adapted to contact actuation portions of the first and second pawls so as to rotate hook portions of the first and second pawls adapted to engage the single pin towards each other when pivoting the first and second pawls from the open position to the closed position.

Example 12: The system of example 10, wherein the at least one pin of the upper bracket comprises an actuating pin, a first locking pin, and a second locking pin, and wherein the actuating pin is adapted to contact actuation portions of the first and second pawls so as to rotate hook portions of the first and second pawls adapted to engage the first and second locking pins towards each other when pivoting the first and second pawls from the open position to the closed position.

Example 13: A vehicle, comprising: a rear cab suspension; a chassis; and the system according to any of examples 10-12 for locking the rear cab suspension to the chassis.

Example 14: The vehicle of example 13, further comprising a cab and a gantry, the gantry comprising at least one traction battery pack, wherein the rear cab suspension is installed on the cab, and wherein the gantry is mounted to the chassis immediately behind the cab.

Example 15: The vehicle of any of examples 13-14, wherein the cab is a non-tiltable cab.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method for locking a rear cab suspension (12) to a vehicle chassis (14), the method comprising:
mounting (S1) a first bracket (16) to the rear cab suspension, wherein the first bracket (16) comprises at least one pin (22, 52, 54a-b), and wherein the rear cab suspension (12) is installed on a non-tiltable cab (56);
mounting (S2) a second bracket (24) on the vehicle chassis (14), wherein the second bracket (24) comprises first and second pivotable pawls (30a-b); and
when decking the non-tiltable cab (56) on the vehicle chassis (14), bringing (S3) the first and second brackets (16, 24) together such that at least one of the first and second pivotable pawls (30a-b) automatically locks at least one (22, 54a-b) of the at least one pin, thereby locking the rear cab suspension (12) to the vehicle chassis (14).

2. The method of claim 1, wherein the second bracket (24) further comprises a spring mechanism (32a-b) and a restraining mechanism (34), wherein the first and second pawls (30a-b) have an open position and a closed position, wherein the spring mechanism (32a-b) is configured to urge the first and second pawls (30a-b) to the open position, wherein the first and second pawls (30a-b) are pivoted from the open position to the closed position by at least one (22, 52) of the at least one pin of the first bracket (16) when bringing the first and second brackets (16, 24) together, wherein the first and second pawls (30a-b) in the closed position lock at least one (22, 54a-b) of the at least one pin of the first bracket (16), and wherein the restraining mechanism (34) secures the first and second pawls (30a-b) in the closed position.

3. The method of claim 2, wherein the at least one pin of the first bracket (16) is a single pin (22) contacting actuation portions (38a-b) of the first and second pawls (30a-b) so as to rotate hook portions (36a-b) of the first and second pawls (30a-b) adapted to engage the single pin (22) towards each other when pivoting the first and second pawls (30a-b) from the open position to the closed position.

4. The method of claim 3, wherein said actuation portions (38a-b) are offset in a direction parallel to a pivot axis (42) of the first and second pawls (30a-b), and at least partly overlap when the first and second pawls (30a-b) are in the closed position, and/or wherein said hook portions (36a-b) are offset in a direction parallel to a pivot axis (42) of the first and second pawls (30a-b), and at least partly overlap when the first and second pawls (30a-b) are in the closed position.

5. The method of claim 2, wherein the at least one pin of the first bracket comprises an actuating pin (52) and first and second locking pins (54a-b), and wherein the actuating pin (52) contacts actuation portions (38a-b) of the first and second pawls (30a-b) so as to rotate hook portions (36a-b) of the first and second pawls (30a-b) adapted to engage the first and second locking pins (54a-b) towards each other when pivoting the first and second pawls (30a-b) from the open position to the closed position.

6. The method of claim 5, wherein the actuating pin (52) and the first and second locking pins (54a-b) of the first bracket (16) are arranged in an upside down triangular configuration, with the actuating pin (52) in the bottom corner and the first and second locking pins (54a-b) in the top corners.

7. The method of any of claims 2-6, wherein the restraining mechanism (34) comprises a spring (46) and a restraining element (47) controlled by the spring (46) to snap into indentations (40a-b) on the first and second pawls (30a-b) when the first and second pawls (30a-b) are in the closed position, to thereby secure the first and second pawls (30a-b) in the closed position.

8. The method of any of claims 1-7, wherein the first bracket (16) is mounted under a crossbeam (60) of the rear cab suspension (12), and wherein the second bracket (24) is mounted directly on a rail (62) of the chassis (14).

9. The method of any of claims 1-8, wherein a gantry (66) to be located immediately behind the non-tiltable cab (56) is mounted to the chassis (14) before decking the non-tiltable cab (56) on the chassis (14), the gantry (66) comprising at least one traction battery pack (68).

10. A system (10) for locking a rear cab suspension (12) to a chassis (14), the system (10) comprising:
an upper bracket (16) adapted to be mounted to the rear cab suspension (12), the upper bracket (16) comprising at least one pin (22, 52, 54a-b); and
a lower bracket (24) adapted to be mounted on the chassis, the lower bracket comprising a first pawl (30a) and a second pawl (30b), a spring mechanism (32a-b), and a restraining mechanism (34),
wherein the first and second pawls (30a-b) have an open position and a closed position, wherein the spring mechanism (32a-b) is configured to urge the first and second pawls (30a-b) to the open position, wherein the first and second pawls (30a-b) are pivotable from the open position to the closed position by at least one (22, 52) of the at least one pin of the upper bracket (16), wherein the first and second pawls (30a-b) in the closed position are configured to lock at least one (22, 54a-b) of the at least one pin of the upper bracket (16), and wherein the restraining mechanism (34) is adapted to secure the first and second pawls (30a-b) in the closed position.

11. The system of claim 10, wherein the at least one pin of the upper bracket (16) is a single pin (22) adapted to contact actuation portions (38a-b) of the first and second pawls (30a-b) so as to rotate hook portions (36a-b) of the first and second pawls (30a-b) adapted to engage the single pin (22) towards each other when pivoting the first and second pawls (30a-b) from the open position to the closed position.

12. The system of claim 10, wherein the at least one pin of the upper bracket comprises an actuating pin (52), a first locking pin (54a), and a second locking pin (54b), and wherein the actuating pin (52) is adapted to contact actuation portions (38a-b) of the first and second pawls (30a-b) so as to rotate hook portions (36a-b) of the first and second pawls (30a-b) adapted to engage the first and second locking pins (54a-b) towards each other when pivoting the first and second pawls (30a-b) from the open position to the closed position.

13. A vehicle (58), comprising:
a rear cab suspension (12);
a chassis (14); and
the system (10) according to any of claims 10-12 for locking the rear cab suspension (12) to the chassis (14).

14. The vehicle of claim 13, further comprising a cab (56) and a gantry (66), the gantry (66) comprising at least one traction battery pack (68), wherein the rear cab suspension (12) is installed on the cab (56), and wherein the gantry (66) is mounted to the chassis (14) immediately behind the cab (56).

15. The vehicle of any of claims 13-14, wherein the cab is a non-tiltable cab (56).
